Europäisches Patentamt

**European Patent Office**

**Office européen des brevets**

(11) Veröffentlichungsnummer: **0 202 283**
**B1**

# EUROPÄISCHE PATENTSCHRIFT

(45) Veröffentlichungstag der Patentschrift:
**31.01.90**

(51) Int. Cl.⁴: **G 03 B 23/02**

(21) Anmeldenummer: **85905813.3**

(22) Anmeldetag: **12.11.85**

(86) Internationale Anmeldenummer:
**PCT/EP 85/00612**

(87) Internationale Veröffentlichungsnummer:
**WO 86/03026 (22.05.86 Gazette 86/11)**

(54) **VORRICHTUNG ZUM ZYKLISCHEN UMSCHICHTEN EINES BLATTSTAPELS.**

(30) Priorität: **13.11.84 DE 3441449**

(43) Veröffentlichungstag der Anmeldung:
**26.11.86 Patentblatt 86/48**

(45) Bekanntmachung des Hinweises auf die Patenterteilung:
**31.01.90 Patentblatt 90/5**

(84) Benannte Vertragsstaaten:
**AT BE CH DE FR GB IT LI NL SE**

(56) Entgegenhaltungen:
**DE-A- 2 912 642**
**DE-A- 3 342 238**
**FR-A- 2 403 574**
**FR-A- 2 440 902**
**US-A- 4 376 348**

(73) Patentinhaber: **Licinvest AG, Hartbertstrasse 9,
CH-7002 Chur (CH)**

(72) Erfinder: **ACKERET, Peter, Allmendstrasse 18,
CH-8700 Küsnacht (CH)**

(74) Vertreter: **Röhl, Wolf Horst, Dipl.-Phys., Dr. et al,
Dipl.-Ing. K. Sparing Dipl.-Phys. Dr. W.H. Röhl
Rethelstrasse 123, D-4000 Düsseldorf 1 (DE)**

## Beschreibung

Die Erfindung betrifft eine Vorrichtung zum zyklischen Umschichten eines Blattstapels. Derartige Vorrichtungen sind aus den nachstehend genannten US-Patentschriften bekannt: 4 238 898, 4 238 899, 4 241 528, 4 245 417, 5 159 802 und 4 376 348.

Die bekannten Vorrichtungen, hier und im folgenden meist als «Blatt-» oder «Bildwechsler» bezeichnet, umfassen ein erstes Rahmenteil, z.B. ein mit einem Sichtfenster versehenes Gehäuse, und ein zweites Rahmenteil, z.B. einen aus dem Gehäuse parallel zur Sichtfensterebene herausziehbaren und wieder einschiebbaren Schieber. Die Rahmenteile enthalten einen Wechselmechanismus, der sehr unterschiedlich aufgebaut sein kann; der Wechselmechanismus bewirkt, daß beim Auseinanderziehen der Rahmenteile ein Blatt an einem Stapelende, z.B. dem der Scheibe abgekehrten, abgenommen wird und beim Zusammenschieben der Rahmenteile auf der andern Stapelseite, im Beispielsfalle also auf der dem Sichtfenster zugewandten Stapelseite wieder zugeführt wird. Dabei führt entweder beim Auseinanderziehen oder beim Zusammenschieben der Rahmenteile das dann jeweils oberste Blatt im Stapel eine Relativbewegung zum Fenster aus.

Handelt es sich bei den Blättern um Fotoabzüge, so ist deren Oberfläche relativ rauh; hinzu kommt, daß auch Staub abgelagert sein kann. Solange man ein Sichtfenster aus Mineralglas verwendet, stört dies nicht; da aber solche Bildwechsler als Massenerzeugnisse gedacht sind, die kostengünstig aus Kunststoffspritzteilen gefertigt werden sollen, wird man auch für das Fenster ein Kunststoffmaterial, z.B. Acrylharz, bevorzugen. In diesem Falle ist ohne zusätzliche Maßnahmen die Innenseite des Fensters schon nach einer relativ geringen Anzahl von Bildwechselvorgängen so stark zerkratzt, daß es praktisch undurchsichtig ist.

In der obenerwähnten US-A-4 376 348 sind daher Mittel offenbart, die dafür sorgen sollen daß zumindest während der Relativbewegung zwischen dem obersten Blatt im Stapel und dem Sichtfenster ein Sicherheitsabstand zwischen beiden eingehalten wird. Diese Mittel umfassen Niederhalter, die über die zur Auszugsrichtung des Schiebers parallelen Stapelkanten greifen. Von diesem Stand der Techniker geht die Erfindung aus.

Fotoabzüge sind nicht nur rauh, sondern auch aufgrund ihrer physikalisch-chemischen Eigenschaften fast niemals eben, sondern sie weisen im allgemeinen Krümmungen und Verwerfungen auf. Deshalb besteht die Gefahr, daß trotz der erwähnten Niederhalter noch stellenweise Kontakt zwischen Bild und Fenster vorliegen kann, etwa in der mittleren Symmetrieebene des Fensters, so daß sich dort eine mattierte Bahn ausbildet.

Aufgabe der Erfindung ist es, eine Vorrichtung der eingangs geschilderten Gattung zu schaffen, bei der diese Gefahr eliminiert ist, ohne daß man den Abstand zwischen Bild und Fenster sehr stark vergrößert, weil dies sowohl unökonomisch als auch wenig ästhetisch wäre.

Diese Aufgabe wird gemäß der Erfindung durch die im Patentanspruch 1 genannten Merkmale gelöst.

Dabei wird, wie aus sich der nachfolgenden Erläuterung von Ausführungsbeispielen ergeben wird, die Ausgestaltung der Niederhaltemittel so getroffen, daß der eigentliche Blattwechselvorgang nicht gestört wird, das heißt, daß das vereinzelte Blatt unter die Niederhaltermittel geführt werden kann. Dies ist in unterschiedlicher Weise möglich:

Die Niederhaltermittel oder kurz «Niederhalter» können stationär oder beweglich sein.

Man kann eine Art «Rückschlagventil» vorsehen, das in der gewünschten Richtung das Bild durchtreten läßt, dann aber in Niederhalteposition zurückkehrt.

Man kann ein durch die Rahmenteilbewegung gesteuertes Wirksamwerden des Niederhalters vorsehen.

Weitere Möglichkeiten ergeben sich für den Fachmann aus der nachfolgenden Beschreibung von Ausführungsbeispielen. Dabei sei darauf hingewiesen, daß bezüglich der «unkritischen» Niederhalter auch auf Ausführungsformen zurückgegriffen werden kann, die in der oben genannten Druckschrift offenbart wurden.

Ausführungsbeispiele des Gegenstandes der Erfindung sind in den beigefügten Zeichnungen dargestellt und werden nachstehend im einzelnen erläutert.

Fig. 1 zeigt in Draufsicht/Teilschnitt bei etwa halb auseinandergezogenen Rahmenteilen ein erstes Ausführungsbeispiel,

Fig. 2 bis 5 sind Längsschnitte entsprechend den gleichbezifferten Schnittlinien in Fig. 1,

Fig. 6 ist ein Teilquerschnitt nach Linie 6-6 der Fig. 1,

Fig. 7 ist ein Teillängsschnitt durch ein Element einer Trenneinrichtung aus Fig. 1,

Fig. 8 ist ein Teilquerschnitt durch dasselbe Element,

Fig. 9 zeigt in Draufsicht, teilweise geschnitten, und in einer Bildhälfte auseinandergezogen ein zweites Ausführungsbeispiel,

Fig. 10 ist ein zugehöriger Längsschnitt,

Fig. 11 und 12 sind Querschnitte zur Erläuterung eines der Niederhalter,

Fig. 13 ist ein schematisierter Längsschnitt und stellt die Startposition der Rahmenteile dar,

Fig. 14 bis 18 erläutern eine Variante dieses Niederhalters,

Fig. 20 bis 33 zeigen schematisiert alternative Gestaltungen und Details beweglicher oder fester Niederhalter.

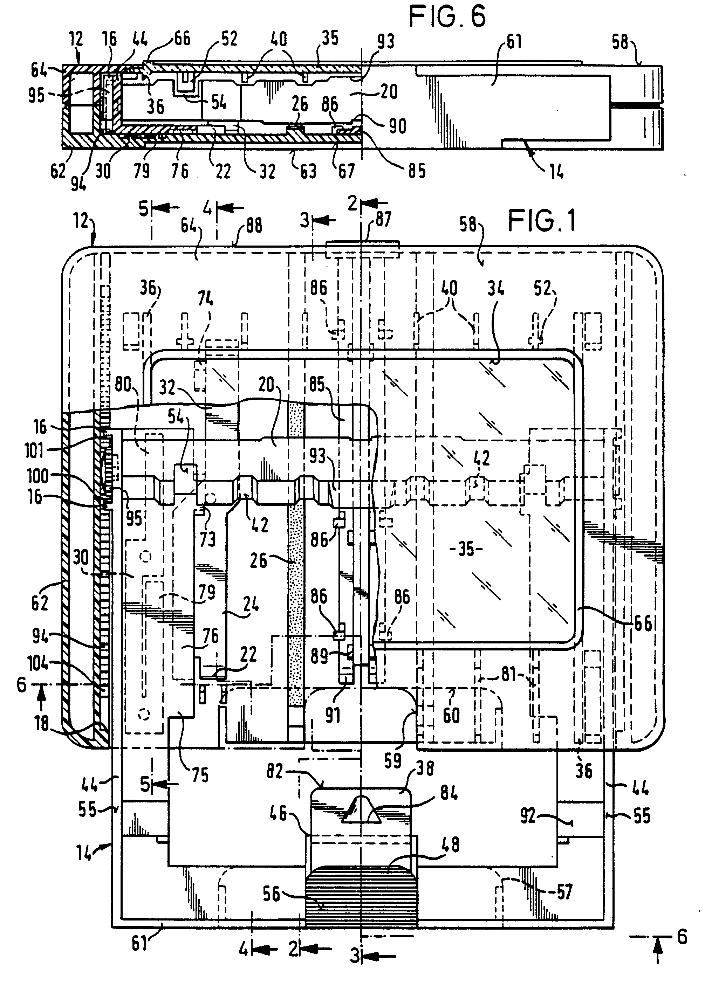

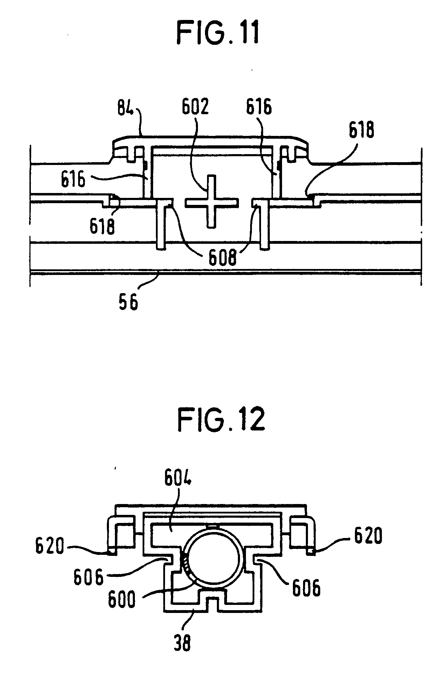

Soweit sich die Art der Darstellung (Schnitt, Ansicht usw.) nicht aus den Figuren für den Fachmann von selbst ergibt, ist bei den jeweiligen Figurenbeschreibungen darauf hingewiesen. Der Fachmann kann diese Darstellungen dann auch sinngemäß durch sinngemäße Übernahme der sonstigen Einzelheiten aus Fig. 1-13 komplettieren oder auch auf Konstruktionen zurückgreifen, die in den eingangs genannten Druckschriften beschrieben sind.

Der in Fig. 1 bis 8 dargestellte Bildwechsler umfaßt als erstes Rahmenteil ein Gehäuse 12 und als zweites Rahmenteil einen Schieber 14 zur Aufnahme eines Bilderstapels, wobei der Schieber 14 aus dem Gehäuse 12 um einen durch Anschläge 16 am Schieber und Gegenanschläge 18 am Gehäuse begrenzten Hub herausziehbar und wieder einschiebbar ist. Die Trenneinrichtug wird von einem Separatorsteg 20 gebildet. Die Zufuhreinrichtung wird von Haken 22 verkörpert, die an Blattfederarmen 24 sitzen. Die Halteeinrichtung zum Halten des Reststapels im Schieber wird ebenfalls von dem Separatorsteg gebildet, während das abgetrennte Einzelbild im Gehäuse durch das Zusammenwirken von im Gehäuse stationär angeordneten, mit einem Haftbelag 26 versehenen Schienen mit das Einzelbild gegen sie klemmenden, durch den Kontakt mit diesen zum Umlauf angetriebenen Rollen 28 gehalten wird. Schließlich wird die Leiteinrichtung durch Paare von Blattfedern 30 sowie mit den Federarmen 24 einstückig ausgebildete Federarme 32 verköpert.

Die Federarme 24 und 32 drücken im eingeschobenen Zustand des Schiebers 14 den Bilderstapel (in Fig. 1 nicht gezeigt) gegen ein Sichtfenster, dessen innere Kontur mit 34 bezeichnet ist. Das dann im Stapel oberste Bild, ein Fotoabzug, soll dann möglichst plan liegen; zu diesem Zweck ist es an seinem Umfang in einer Ebene abgestützt, die definiert ist durch seitliche Rippen 36, die Unterseite eines Griffstück-Schiebeteils 38 und auf der ihm gegenüberliegenden Seite durch an das Gehäuse angeformte Rippen 40.

Fig. 1 zeigt die teilausgezogene Position des Schiebers 14. Im eingeschobenen Zustand liegt der Separatorsteg jenseits dieser Rippen 40; da er aber weiter zum Fenster 35 vorsteht, das dem Niveau dieser Rippen entspricht, weist er für das Passieren derselben Einschnitte 42 auf.

Die Abstützung der Kanten des Stapels erfolgt seitlich (d.h. parallel zur Auszugsrichtung) durch Holme 44 des Schiebers. Frontseitig, das heißt auf der Seite des Schiebers, die beim Auszug am weitesten vom Gehäuse entfernt ist, wird die Abstützung der Kanten durch die Anschlagfläche 46 eines mittig angeordneten Griffstücks 48 sowie durch seitliche Anschlagflächen 50 am Schieber bewirkt. Am gegenüberliegenden Ende stützen sich die Kanten der Fotos an an dem Gehäuse angeformten Anschlägen 52 ab, für die der Separatorsteg ebenfalls Durchlaß-Ausnehmungen 54 aufweist, die jedoch wesentlich tiefer sind als die für die Rippen 40.

Die Rippe 36 reicht weiter in das Innere des Schiebers hinein, als dem Niveau entspricht, das von der Oberkannte 55 der Schieberholme definiert ist, so daß die Fotos nicht seitlich nach außen über die Schieberholme gleiten können. Die entsprechende Wirkung tritt zwischen Separatorsteg einerseits, Rippen 40 andererseits ein.

Das Griffstück 48 hat eine auf der Fensterseite des Gehäuses liegende Oberplatte 56 und eine Unterplatte 57, die breiter ist als die Oberplatte; die das Fenster rahmenartig umgebende Deckwand 58 des Gehäuse weist im Bereich der Oberplatte einen Ausschnitt 59 auf, während die gegenüberliegende Gehäusewandung für die Unterplatte 57 komplementär bei 60 eingetieft ist. Demgemäß hat die Vorrichtung im geschlossenen Zustand eine in sich geschlossene, im wesentlichen rechteckige Kontur ohne vorstehende Teile.

Das Gehäuse und der Schieber sind Kunststoff-Spritzteile. Der Schieber ist ein einteiliges Element, bestehend aus Holmen, Separatorsteg, Griffstück und einer das Griffstück mit den Holmen – die L-förmigen Querschnitt besitzen – verbindenden Stirnwand 61.

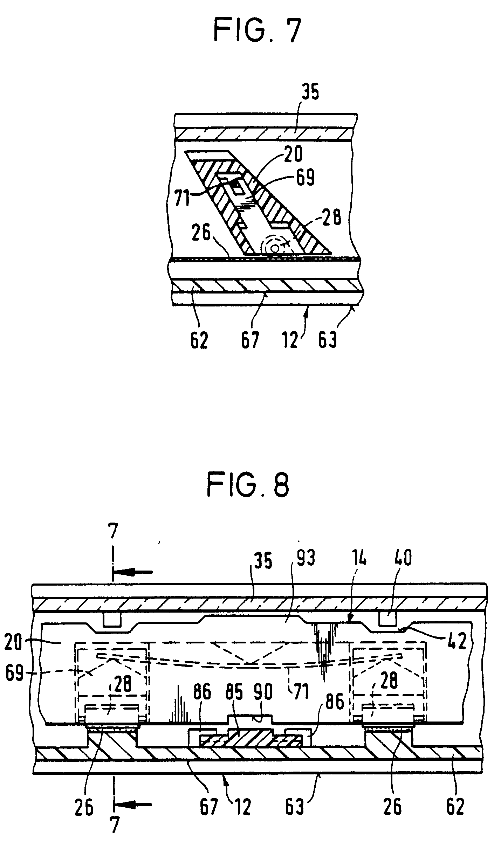

Das Gehäuse ist aus drei Teilen zusammengesetzt: der Unterschale 62 mit Gehäuseboden 63, der rahmenartigen Oberschale 64 mit Fensterausschnitt, und dem in dieses eingesetzten Fenster 35. Das Gehäuse ist in Richtung der Schieberbewegung dadurch versteift, daß die Streben zwischen Deck- und Bodenwandung als Doppelträger ausgeführt sind, wie in Fig. 6 erkennbar. Die Gehäuseteile können miteinander verschweißt sein, oder man kann eine Schnappverbindung vorsehen.

Das Fenster weist rings um seine Hauptfläche einen schmalen, nach außen etwas vorstehenden Rand 66 auf, so daß es gegenüber dem ihn umgebenden Rahmen etwas vorsteht. Eine zur Kontur dieses Randes komplementäre Eintiefung ist auf der Außenseite der gegenüberliegenden Bodenwandung mit 67 bezeichnet und erlaubt das Übereinanderstapeln mehrerer Gehäuse.

Beim Herausziehen des Schiebers aus dem Gehäuse wird dieser mit einer Hand an Ober- und Unterplatte des Griffstücks erfaßt, während die andere Hand das Gehäuse hält. An den frontseitigen – also dem Separatorsteg abgewandten – Kanten der auf den Federarmenden liegenden Fotos greifen die Hanken 22 an, wodurch eine gewisse Anzahl von Fotos – je nach der Höhe der Haken – der Trenneinrichtung zugeführt wird. Diese stellt sich letztlich als ein Durchlaßspalt dar, der einerseits von (im Ausführungsbeispiel) zwei an den Gehäuseboden innen angeformten Stufen 68, andererseits von der ihnen zugewandten Unterseite von Schuhen 69 begrenzt wird, die in den Separatorsteg eingesetzt sind und die in Fig. 7 im Schnitt und in Fig. 8 in Frontansicht erkennbar sind.

Zu jeder Stufe 68 gehört ein Schuh 69, und jedes System Stufe/Schuh ist beidseits der Symmetrieebene 70 der Vorrichtung angeordnet. Die Schuhe sind im Sepratorsteg längsgeführt, mit einem Schneidenlager abgestützt und von einer eingelegten Drahtfeder 71 vorgespannt. In jedem Schuh ist außerdem ein Röllchen um eine zur Auszugsrichtung senkrechte Achse drehbar aufgenommen, und das Röllchen 28 ragt etwas aus dem Schuh heraus.

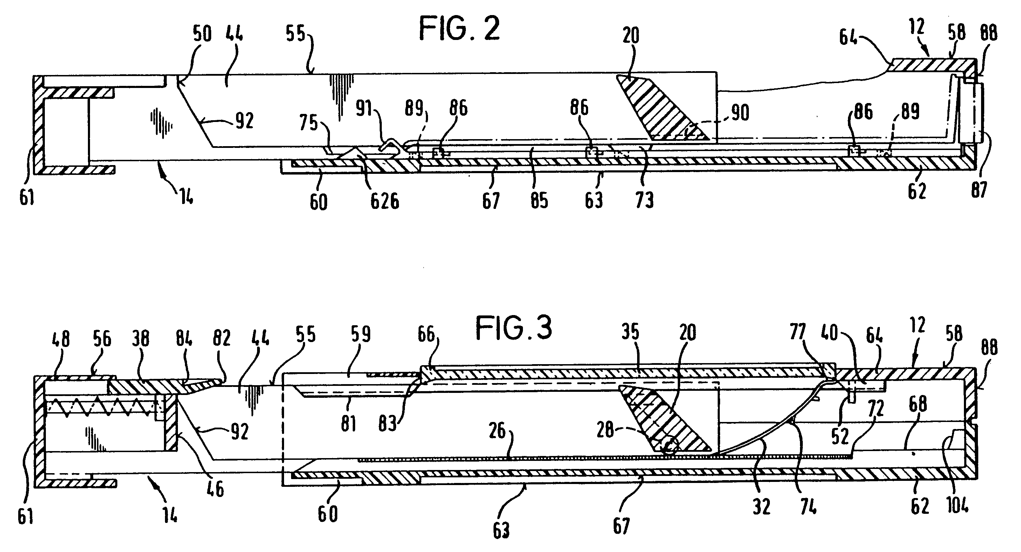

In Fig. 3 erkennt man die Lage der Stufen 68, die um reichlich die Dicke eines Fotoabzugs weiter über das Gehäusebodenniveau hinaussteht als die Oberfläche des Haftbelages 26. In der Ruhestellung des Schiebers liegt der unterste Abschnitt der Schuhe ein Stück weiter von der Kante 72 der Stufe entfernt, und die dem Stapel zugekehrte Fläche des Separatorstegs ist keilartig abgeschrägt derart, daß bei Auflaufen des Separators auf die Stapelkante die Fotos, an deren gegenüberliegender Kante die Haken 22 angreifen, längs der Schräge abwärts «wandern», in Richtung auf die ihnen zugekehrte Kante 72 der Stufen. Nur gerade die führende Kante eines einzigen Fotos hat zwischen den Schuhen 69 und dem Haftbelag 26 soviel Platz, daß dieses im Stapel unterste Foto in den sich bildenden Spalt zwischen Schuhen 69 und Haftbelägen 26 eintreten kann, solange dieser Spalt von der Stufe 68 offengehalten wird. Alle anderen, vom Haken 22 mitgeführten Fotos stoßen an den Separator selbst oder an dessen Schuhe an mit der Folge, daß die Haken von deren Endkante abrutschen.

Wenn die in Auszugsrichtung hinteren Kanten der Schuhe 69 die Kante 72 der Stufen 68 passiert haben, senken sich die Schuhe unter der Wirkung der Drahtfeder 71, wobei die Rollen 28 sich auf das so abgetrennte einzelne Foto setzen und dieses auf die zugeordneten Haftbeläge pressen, wodurch es im Gehäuse – also dem ersten Rahmenteil – festgehalten wird. Der Reststapel wird vom Separator zusammen mit dem Schieber nach außen mitgenommen, bis dieser ganz ausgezogen ist.

Dabei ist zu beachten, daß die Federarme 32 ja auch vom Separatorsteg überlaufen werden. Damit sie während des Durchlaufs ihrer am Stapel angreifenden Enden nicht das abgetrennte Bild von unten belasten, werden sie während einer bestimmten Phase des Auszugshubes mechanisch in Richtung Gehäuseboden gedrückt. Hierzu dienen an die Schieberholme 44 angeformte Kufen 73, die seitlich von den Federarmen auskragende Ansätze 74 überstreichen und die Arme entsprechend ihrer Länge auf einem Teilhub halten. Weitere Kufen 75 an den Schieberholmen laufen auf die Federarme 24 an der Verbreiterung 76 auf, sobald das Einzelfoto zwischen Haftbelag und Rollen sicher geklemmt ist, und drücken diese Arme ebenfalls vom Sichtfenster weg, so daß man ungehindert weitere Fotos einfüllen, andere entnehmen kann.

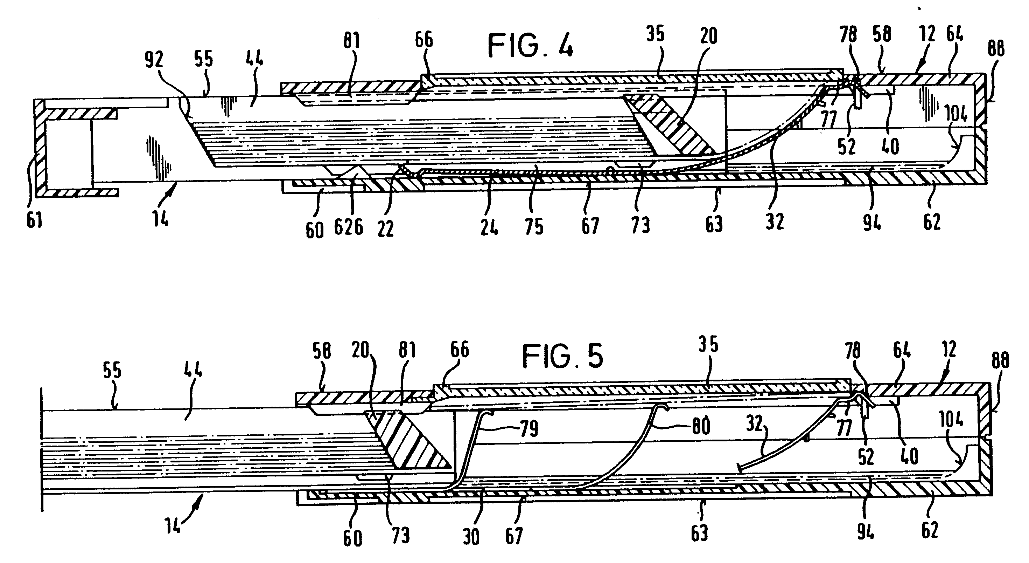

Auf den dem Stapel abgeandten Seite des Separators werden die Federarme 32 nach kurzem Hub wieder freigegeben, so daß sie wieder unter das vereinzelte Foto greifen und dessen hintere Kante allmählich in Richtung Fenster führen. Schließlich legt sich diese Kante unter der Wirkung der Federn an die Gehäuseoberseite an. Da die freien Enden der Federarme abgerundet sind, andererseits aber diese Kante sicher an der erreichten Position festgeklemmt werden soll, ist an den Federarmen noch ein kurzes Stück geradlinig ausgebildet, in Fig. 4 mit 77 bezeichnet. Das abgerundete Federarmende findet dabei Platz in einer Ausnehmung auf der Innenseite der Gehäusedeckwand, in Fig. 5 mit 78 bezeichnet.

Die beiden Haken 22, die beiden Schuhe 69, die Haftbeläge 26 und die Federarme 32 sind sämtlich jeweils symmetrisch bezüglich der Mittelebene der Gesamtvorrichtung angeordnet, und die beiden Haken 22 liegen so genau wie möglich auf einer zu dieser Symmetrieebene senkrechten Linie. Das hat zur Folge, daß das zu wechselnde Foto auch dann ohne Verdrehung den Wechselvorgang durchläuft, wenn es wegen Untermaß nicht an den Schieberholmen geführt ist. Die Abmessungstoleranzen von Fotos sind nämlich bei gleicher Nenngröße unterschiedlich in Quer- und Längsrichtung: Da in den Entwicklungsanstalten die Papiere von Rollen recht genau eingehaltener Breite verarbeitet werden, die dann auf unterschiedliche Länge geschnitten werden, ist es bevorzugt, in Richtung der Schieberbewegung das Fotomaß vorzusehen, das enger toleriert ist.

Das abgetrennte Einzelbild, das bis jetzt nur an seiner einen Kante eingeklemmt gehalten wird als ganzes in Richtung Fenster gehoben. Hierzu dienen die schon erwähnten Blattfedern 30 mit frontseitigen Armen 79 und rückseitigen Armen 80, die – wie in Fig. 5 deutlich erkennbar – das Einzelfoto so halten und abstützen, daß es beim Schieberrückhub wieder auf den Stapel gelangen kann. Im geschlossenen Zustand der Vorrichtung und während des Auszugshubes des Schiebers – zumindest während des ersten Teils desselben – sind die Federarme 79, 80 von den Holmen des Schiebers in entsprechende Nuten des Gehäusebodens gedrückt, die in Fig. 6 erkennbar sind.

Zu Beginn des Rückhubs des Schiebers ist das Einzelfoto von den Federarmen 32 vorn den an das Gehäuse angeformten Anschlägen 52 eingeklemmt und wird in Richtung Separatorsteg an vier Stellen von den Federarmen 79, 80 abgestützt. Die dem Separatorsteg zugekehrte andere Querkante des Fotos kann nach unten durchhängen; die ihr zugekehrte Seite des Separators ist jedoch keilförmig abgeschrägt, so daß die Kante allmählich gehoben wird, wenn der Separatorsteg auf sie zuläuft. Zwischen der Oberkante des Separatorstegs und der Gehäusedeckwand ist ein Spalt, der für den Durchlaß des Fotos reichlich bemessen ist. Der Gefahr, daß das Foto auf die ihm zugekehrt liegenden Kanten des vom Schieber mitgeführten Reststapels aufstößt, wird dadurch begegnet, daß die Gehäusedeckwand innen Niederhaltenocken 81 aufweist, die den Stapel unter dem Niveau der Separatoroberseite halten. Diese Niederhaltenocken stehen ausgefluchtet mit den Rippen 40, so daß sie durch die entsprechenden Ausschnitte 42, 54 des Separatorsteges passen.

Das Griffstück-Schiebeteil 38 ist gleitbeweglich im Griffstück aufgenommen und steht unter Federvorspannung in Richtung Gehäuse, wie in Fig. 3 gut erkennbar. Beim Einschub des Schiebers trifft seine freie Kante 82 auf einen im Gehäuse vorgesehenen Anschlag 83, wodurch er in das Griffstück zurückgedrückt wird und nicht in den durch das Gehäusefenster sichtbaren Raum ragt. Nach dem Herausziehen hingegen sichert er die im Schieber liegenden Fotos gegen Herausfallen. Zum Wechseln der Fotos kann er von Hand zurückgedrückt werden, was durch Fingerkante 84 erleichtert wird. Man kann die Fotos von der Unterseite des Schiebers her, zwischen die Holme greifend, herausdrücken oder neben dem Griffstück von oben hineinfassen.

Beim dem insoweit beschriebenen Vorgang bleibt immer das abgetrennte Foto im Gehäuse zurück. Es ist nicht oder nicht ohne weiteres möglich, dieses aus der Vorrichtung zu entnehmen. Um den Stapel, auch wenn dieser nur aus einem Bild besteht, entnehmen zu können, ist daher eine besondere Einrichtung vorgesehen.

Im Gehäuse ist eine Steuerbrücke 85 verschieblich aufgenommen, gehalten von an das Gehäuse angeformten Klammern 86. Die Brücke trägt einen Steuerknopf 87, der die Rückwand 88 des Gehäuses durchsetzt und geringfügig über die Wechslerkontur vorsteht. Bei Fingerdruck auf den Knopf läuft die Brücke auf Keile 89 am Gehäuseboden auf und wird dadurch in Richtung Fenster gehoben. Die Breite der Brücke paßt gerade in einen entsprechenden Ausschnitt 90 im Separator und versperrt, auf dem gesamten Auszugshub des Schiebers, den Durchlaßspalt der Trenneinrichtung, so daß jedes in der Vorrichtung befindliche Bild mit dem Schieber heraustransportiert werden muß. Nahe der äußeren Endstellung des Schiebers überläuft dessen Separatorsteg eine hochstehende Nase 91 der Brücke, die nach unten ausfedert; wird der Schieber jetzt wieder eingeschoben, drückt der Separatorsteg zuerst die Brücke in ihre Ausgangsstellung zurück, ehe er nach erneuter Auslenkung der Nase 91 frei zurückführbar ist.

Wie oben erwähnt, sollen die Fotos durch die geschilderten Mittel im Abstand von der Fensterscheibe gehalten werden, damit diese bei den Wechselvorgängen nicht in Berührung mit der Bildoberfläche gelangt, wodurch Kratzschäden auftreten würden. Die Gefahr besteht jedoch gleichwohl, weil die Fotos nicht (immer) eben sind, sondern in aller Regel eine Wölbung entweder in Längs- oder in Querrichtung aufweisen. Bei Wölbung in Längsrichtung genügen die auf dem gesamten Auszugshub wirksamen Rippen 36. Im anderen Falle hingegen ist zwar das Griffstück-Schiebeteil wirksam, doch der gegenüberliegende Abschnitt des Separatorsteges wäre kaum in der Lage, die erheblichen Spannungen aufzunehmen, die in einem dickeren Stapel gleichartig gewölbter Fotos entstehen.

Unterhalb der Anschlagflächen 50 weist daher die Schieberfrontwand nahe den Holmen Schrägflächen 92 auf, die im wesentlichen parallel der gegenüberliegenden Separatorschräge sind. Die Fotos liegen also schräg gestaffelt zwischen Separator und Schrägflächen, wodurch ein Großteil der Spannungen im Stapel auf die Gesamtfläche des Separators verteilt wird. Außerdem ist in der Mitte des Separatorsteges eine Erhöhung 93 vorgesehen, die die Restspannung derjenigen Fotos aufnimmt, die an den zu ihrer Kante senkrechten Anschlagflächen 50 abgestützt sind.

Wenn der Benutzer einmal begonnen hat, die Wechselbewegung durchzuführen, so muß diese ganz zu ende gebracht werden, um die Vorrichtung in die Ausgangsposition zu bringen. Man kann also nicht den Schieber halb herausziehen und dann wieder einstoßen.

Dies wird durch einen Mechanismus bewirkt, umfassend eine an das Gehäuse angespritzte Zahnstange 94, mit der ein Zahnrad 95 kämmt, welches einstückig mit seiner Welle ausgebildet ist. Die Welle sitzt in einem zur Zahnstange parallelen Langloch im Schieberholm 44, in das es mittels eines sich am Gehäuse abstüzenden Blattfederchens, angespritzt am Zahnrad, eingedrückt gehalten wird.

Das Langloch ist durch eine Rippe in zwei Teile unterteilt, in denen die Welle nur noch wenig seitliches Spiel hat. Schließlich sind beidseits des Langloches an den Schieber Sperrnasen 100, 101 angeformt, die in der Ebene des Zahnkranzes des Zahnrades liegen und mit ihren Spitzen in diesen eingreifen können.

Es ist wichtig anzumerken, daß zwar auf dem größten Teil des Schieberauszugshubes die Halteeinrichtung von den Rollen 28 im Zusammenwirken mit den Haftbelägen 26 verkörpert wird, daß aber auf dem letzten Teil des Hubes, kurz vor Erreichen der Endposition, auch die Federarme 32, indem sie das Einzelfoto festklammern, als «Fortsetzung» der Halteeinrichtung wirken.

Wie aus der vorhergehenden Erläuterung entnehmbar ist, wird jedes umgeschichtete Blatt während des gesamten Umschichtzyklus niemals freigegeben, sondern an mindestens zwei Punkten erfaßt und damit gegen Verdrehung gesichert. Es ist somit stets unter Kontrolle, hier mit achssymmetrischen Mitteln.

Die stapelparallelen Schenkel der Schieberholme, auf denen sich beim Umschichten das vereinzelte Blatt abstützt, dürfen voneinander höchstens einen solchen Abstand haben, daß ein kurzes Foto, das mit einer Kante gerade an einem dazu senkrechten Holmschenkel anliegt, von dem gegenüberliegenden Holm an der anderen Kante noch gehalten wird.

Wie oben erwähnt, hat die Vorrichtung das Sichtfenster in der Oberschale des Gehäuses. Die Abmessung des Fensters ist dann in Richtung quer zur Bewegungsrichtung höchstens so groß, daß das kürzestmögliche Foto, auch wenn es außermittig liegt, sich nicht mit seiner Kante im Sichtfeld präsentiert. Entsprechendes gilt für die Rippen 36, und ganz dieselben Überlegungen treffen auch zu auf die Federarme 79 und 80 und überhaupt für alle an den Blattflächen angreifenden Bauteile.

Die oben beschriebene und dargestellte Ausbildung des Federsystems, gebildet von den einstückig geschnittenen und paarweise symmetrisch angeordneten Federn mit Federarmen 24 und 32, erfüllt insgesamt fünf Funktionen. Erstens bilden die an ihnen angeformten Haken 22 die Zufuhreinrichtung, wobei die Haken letzlich nur ein Blatt in die Trenneinrichtung mitnehmen. Zweitens bilden beide Arme gemeinsam — genauer gesagt, die vier Arme beider Federn — ein Andrucksystem, mit dem der Stapel bei ruhender Vorrichtung sauber gegen das Fenster gedrückt wird. Drittens dient der Arm 32 dazu, nachdem er vom Separator überlaufen worden ist, das Einzelblatt an die Gehäusedeckwand zu fördern und es dort, viertens, festzuklemmen. Fünftens schließlich sind die Arme 32 dicht genug gegen den Haftbelägen 26 angeordnet, daß sie ein gegebenenfalls infolge statischer Aufladung am Haftbelag anhaftendes Einzelblatt infolge ihrer Vorspannkraft von diesem abschälen können. Anzumerken ist, daß der Arm 32 so geformt und angeordnet ist, daß er vom Separatorsteg überlaufen werden kann, ohne daß es zu einer Störung der glatten Handhabung führt.

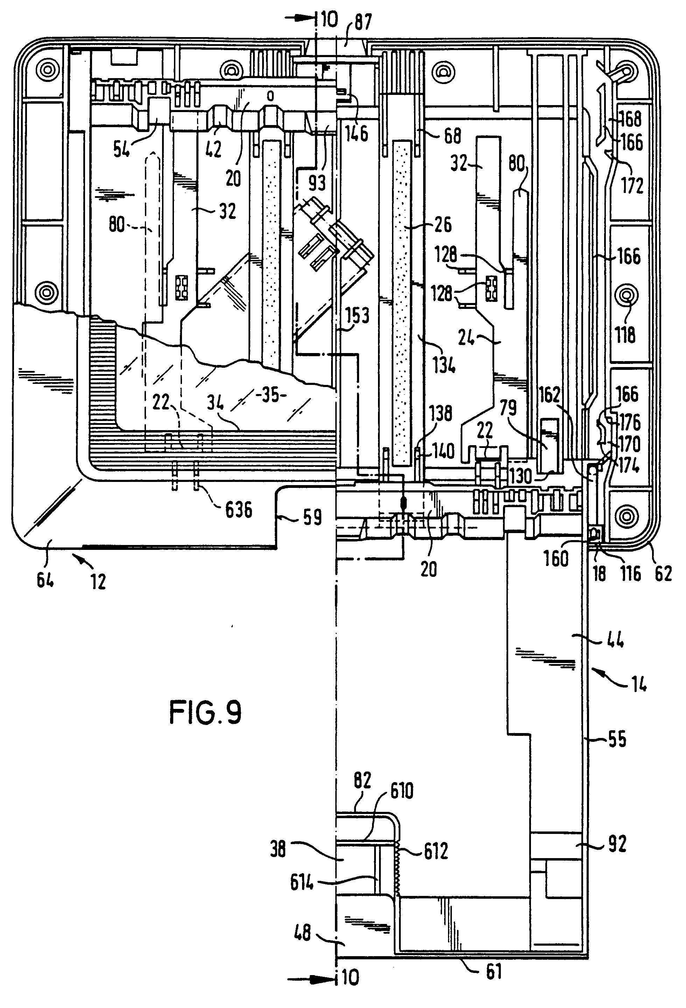

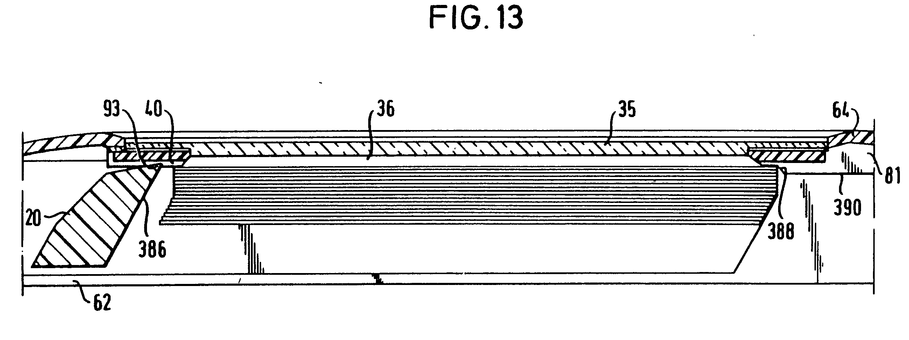

In den Fig. 9 bis 12 ist ein weiteres Ausfürungsbeispiel eines Bildwechslers dargestellt. Im Gehäuse 12 ist der Schieber 14 verschieblich aufgenommen; Gehäuse 12 bildet das erste Rahmenteil, Schieber 14 das zweite. Der Auszugshub ist durch ein an einen der Schiebergholme 44 angeformtes Lagerauge 116, das auf einen gehäuseseitigen Anschlag 18 aufläuft, begrenzt. Das Gehäuse ist aus einer Oberschale 64 und einer Unterschale 62, deren Außenränder formschlüssig ineinandergreifen, zusammengeschraubt, und zwar in dem Bereich zwischen den Schieberholmen 44 und den zu ihnen parallelen Außenkanten des Gehäuses. Hierfür weist jeweils die Unterschale angeformte Führungshülsen 118 für Schraubenschäfte sowie außenseitige Einsekungen für Schraubenköpfe auf, während die Oberschale dazu koaxial angefomrte Kernloch-Hülsen trägt, in die die Schrauben ihr Gewinde selbst schneiden. In die Oberschale 64 ist das Fenster 35 eingeklipst, und die unter seinen äußeren Randbereichen liegenden Teile der Oberschale sind dadurch nicht sichtbar, daß diese Bereiche des Fensters mattiert sind. In Fig. 13 ist die Kontur des mittleren transparenten Fensterabschnitts mit 34 markiert.

Funktionell bestehen wenig Unterschiede gegenüber dem Ausführungsbeispiel nach Fig. 1 bis 10, so daß es genügt, nur die markanten Abweichungen zu erläutern.

Hier sind die Federarme 24, 32 und 80 zu einem Stanz- und Biegeteil zusammengefaßt und mittels Nocken 128 positioniert und kalt festgebördelt. Dagegen sind die Federarme 79 gesonderte Bauteile, die mittels angeformter Nocken an der Unterschale positioniert und kalt festgebördelt werden. Damit dieser Federarm das vereinzelte Bild möglichst frühzeitig hochheben kann, weist der zugehörige Schieberholm 44 Ausschnitte 130 auf. Das sichere Festhalten des vereinzelten Bildes ist während dieser Phase des Wechselzyklus durch die Federarme 32 und 80 gewährleistet, die die dem Schieber abgewandte Endkante des Bildes klammerartig nach oben drücken.

Die Haftbeläge 26 sitzen auf getrennt gefertigten und in die Unterschale eingeklipsten Stegen 134. Man erkennt, daß sie spiegelsymmetrisch gestaltet sind, also an beiden Enden Stufen 68 aufweisen. Der Grund liegt darin, daß dann beim automatischen Beschichten der Stege mit dem Haftbelag kein Sortieren erforderlich ist. Allerdings sind dann zusätzlich Löcher 138 vorzusehen, durch die am griffseitigen Ende des Gehäuses an dessen Unterschale angeformte Auffahrkeile 140 für den Separatorsteg ragen. Die Befestigung der Stege in der Unterschale erfolgt durch Eindrücken in entsprechende Rinnen der Gehäuseunterschale, und die genaue Positionierung erfolgt mittels eines von zwei Zapfen, nämlich mittels des dem Schiebergriff abgewandten Zapfens, während dem anderen Zapfen ein gehäuseseitiges Langloch zugeordnet ist.

Die Stege 134 bilden zugleich die Führung für die in der Symmetrieebene angeordnete Taste 87 mit einem auf den Separatorsteg 20 hin gerichteten Fortsatz 46, der im Zusammenwirken mit Steuerrippe 153 die Entnahme des Gesamtstapels ermöglicht.

Im Lagerauge 116 des Schiebers 14 ist um einen Zapfen 160 schwenkbar eine Steuerklinke 162 angeordnet, die mit einem Steuernocken 164 längs Kanälen geführt ist, die durch an die Unterschale 62 angeformte Führungsschienen 166 definiert sind, so daß der Steuernocken 164 Pfaden beim Einschub bzw. beim Auszug folgen muß. Während des größten Teils des Wechselzyklus kann man ungehindert die Bewegungsrichtung umkehren, nicht jedoch dann, wenn sich der Steuernocken 164 während des Einschubs im Kanalabschnitt 168 bzw. während des Auszugs im Kanalabschnitt 170 befindet. Im ersteren Falle würde, wenn man kurz vor der inneren Einstellung des Schiebers diesen wieder herausziehen will, der Steuernocken auf den Anschlag 172 auflaufen; im letzteren Falle, wenn also kurz vor Erreichen der äußeren Endstellung der Schieber wieder eingeschoben wird, stößt der Steuernocken entweder auf den Anschlag 174 oder auf die Anschlagkante 176. Es ist anzumerken, daß der Zapfen 160 mit hinreichender Reibung im Lagerauge sitzt, daß die Steuerklinke zwar den Führungsstegen ohne merkbare Behinderung folgen, nicht aber frei pendeln kann.

Fig. 13 zeigt in vereinfachter und vergrößerter Darstellung einen Längsschnitt durch die zusammengeschobene Vorrichtung; eine entsprechende Gestaltung kann auch bei Fig 1-8 vorgesehen sein. Auch hier hat der Separatorsteg mittig eine Erhöhung 93, die zwischen Niederhalter 40 greift. Wenn jedoch beim Herausziehen des Schiebers das oberste Bild nur noch seitlich von den Schienen 36 abgestützt wird, besteht die Gefahr, daß das oberste Bild oder sogar mehrere vom Separator abgleiten. Dies wird dadurch verhindert, daß die Niederhalter 81 am Gehäuse noch eine schräge Stufe 388 aufweisen, die zumindest das oberste Bild solange bremsen, bis seine gegenüberliegende Kante an der Unterfläche 386 des Separators anliegt und von dessen Fortsatz 93 übergriffen ist. Durch die Reibung des Bildes an der Unterfläche 390 des Niederhalters 81 wird dieser Zustand aufrechterhalten, auch wenn die Bilder – Fotoabzüge – stark gekrümmt sind.

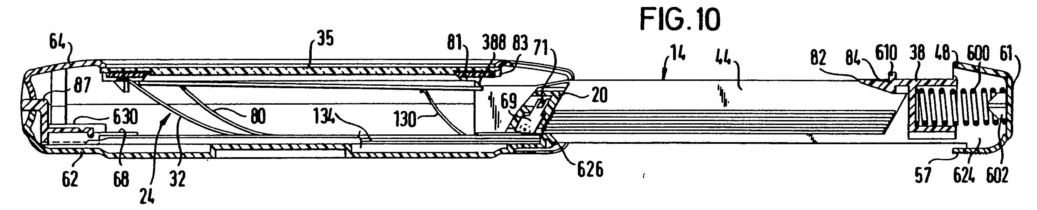

Fig. 10, 11 und 12 zeigen die Anordnung des Griffstück-Schiebeteils 38. Eine Druckfeder 600 drückt das als Niederhalter dienende Griffstück-Schiebeteil 38 über den Bilderstapel. Die Aufnahme der Druckfeder 600 wird auf Seiten des Schiebers 14 durch einen Kreuzzapfen 602 und auf Seiten des Griffstück-Schiebeteils 38 durch dessen Hohlkammer 604 gewährleistet. Die Führung des Griffstück-Schiebeteils 38 wird durch dessen Nuten 606 in Rippen 608 vorgenommen. Das Griffstück-Schiebeteil 38 kann sowohl an einer an seiner Oberseite befindlichen Rippe 610 als auch an einer seitlichen Riffelung 612 zurückgezogen werden. Zwei Schlitze 614 im Griffstück-Schiebeteil 38 nehmen Führungsrippen 616 am Griffstück 48 auf. Die Hubbegrenzung erfolgt durch miteinander in Eingriff bringbare Anschläge 618, 620 am Griffstück 48 bzw. Griffstück-Schiebeteil 38.

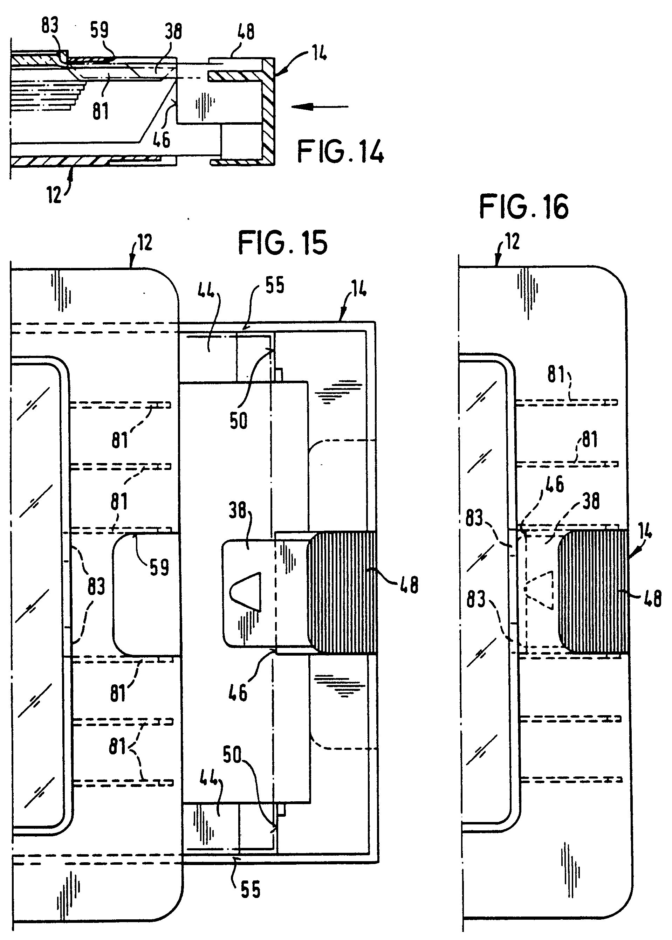

Wie aus Fig. 14 ersichtlich ist, greift die untere Griffpartie 57 in die vordere Gehäusepartie ein, so daß im geschlossenen Zustand die Griffleiste 57 dem entsprechenden Teil des Gehäusebodens überlagert ist. Schlitze im Gehäuseboden 63 ermöglichen das Einfahren von zwei Verbindungsrippen 624 des Griffteils 48, die etwas zurückversetzt sind. Anschrägungen 626 sind benachbart dem Schieberaustrittsende des Gehäuses 14 vorgesehen, die eine Konfrontation der Bilder mit der Stirnseite der Schienen 134 verhindern.

Eine Rippe 630 (Fig. 10) dient im Zusammenspiel mit einer entsprechenden Aussparung am Separator 20 dazu, Bilder, die beim Einfüllen unter den Separator 20 gezwängt wurden, in ihre Sollage zurückzustoßen.

Rippen 636 verhindern eine Konfrontation des Bilderstapels mit der Hakenpartie der Feder 24.

Die Fig. 14-18 zeigen eine alternative Gestaltung des Griffstück-Schiebeteils 38 im Zusammenwirken mit dem Gehäuse 12. Fig. 15 entspricht dabei der Lage nach Fig. 1, wobei das Schiebeteil seine äußere Endstellung einnimmt. Wird jetzt der Schieber eingeschoben, stößt das Schiebeteil auf die Kante 83 und wird etwas eingeschoben. Zur Entnahme des Stapels kann es noch weiter eingeschoben werden.

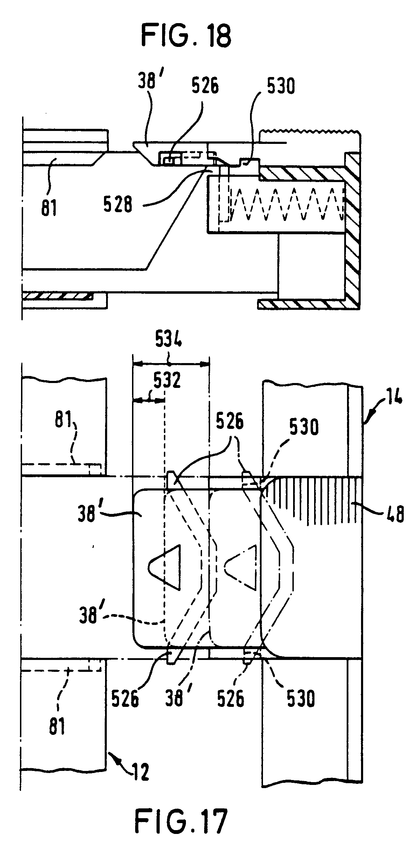

Während der Stapelentnahme wurde in den bisher erläuterten Ausführungsformen das Schiebeteil mit dem Finger blockiert. Fig. 17 und 18 zeigen, wie sich das Schiebeteil 38 in dieser innersten Position selbsttätig verriegeln kann. Hierfür sind am Schiebeteil zwei Federarme 526 angelekt, die während des normalen Wechselbetriebes zwar einwärts ausgelenkt werden, sich dabei aber in den Führungen 528 noch nicht verriegeln. Erst wenn das Schiebeteil ganz eingedrückt wird, erfolgt die Verriegelung an der Stufe 530. Wird dann der Schieber erneut ins Gehäuse eingefahren, so stoßen die Federarme auf die Rippen 81 und werden dadurch ausgelöst. Die Pfeile 532 bzw. 535 definieren die teileingeschobene bzw. ganz eingeschobene Schiebeteil-Position.

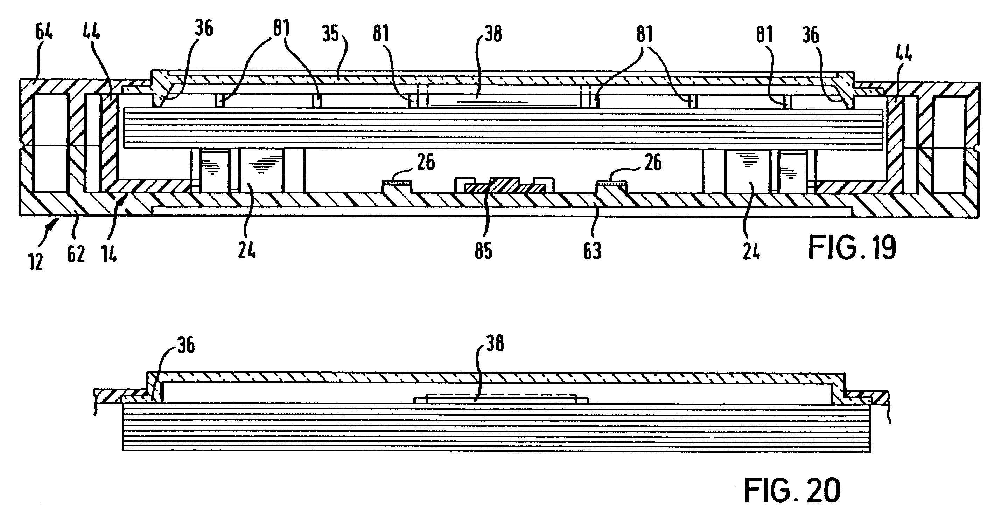

Während Fig. 19 noch einmal die erfindungsgemäßen Mittel aus dem Ausführungsbeispiel nach Fig. 1 bis 8 zeigt, ist in Fig. 20 eine Variante dargestellt. Man erkennt wieder das Griffstück-Schiebeteil 38 und den mittleren Bereich der Gehäuseoberschale, wobei das Fenster soweit gehoben ist, daß auch starkgekrümmte Fotos nicht kratzen können, obwohl die Rippen 81 weggelassen sind, weil das Schiebeteil als Niederhalter wirkt. In diesem Fall wirken die Rippen 36 als Bremse für das oberste Blatt.

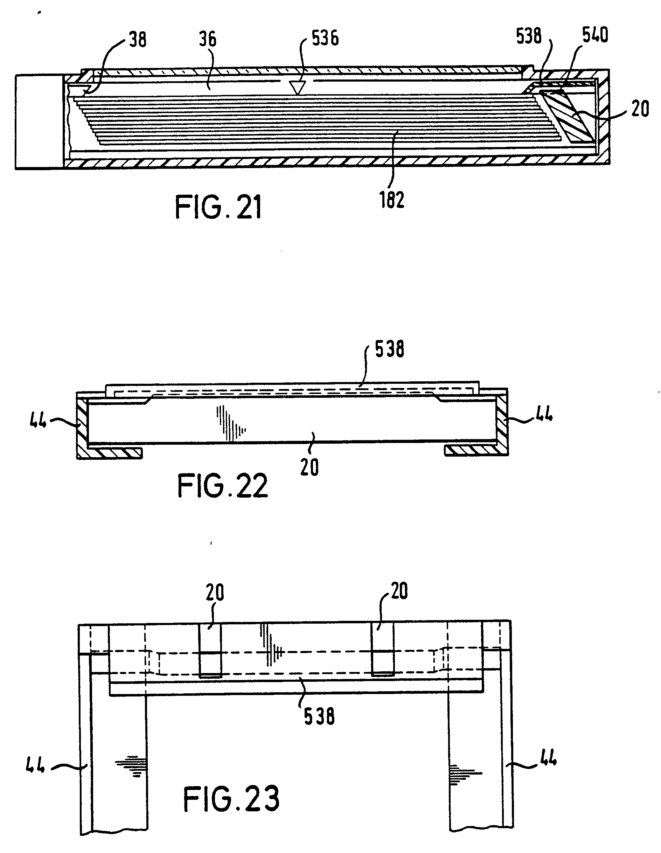

Eine Variante zeigen Fig. 21 bis 23. Man erkennt wieder das Griffstück-Schiebeteil 38, dessen Unterseite das Niveau 536 definiert, das ist das Niveau des dem Fenster zugekehrt liegenden Blattes im Stapel 182. Bis auf dasselbe Niveau reichen auch die an die Gehäusedeckwand angeformten Längsrippen 36 sowie ein Dachteil 538, das mit den Schieberholmen 44 verbunden ist und den Separatorsteg 20 überdacht. Wenn der Separator sich an dem Fenster vorbeibewegt, ist immer das Dachteil 538 noch zwischen den Blättern und dem Fenster, ohne an dem letzteren zu streifen. Das vereinzelte Blatt durchläuft beim Rückhub den Spalt 540 zwischen Separator und Dachteil in einer Tauchbewegung.

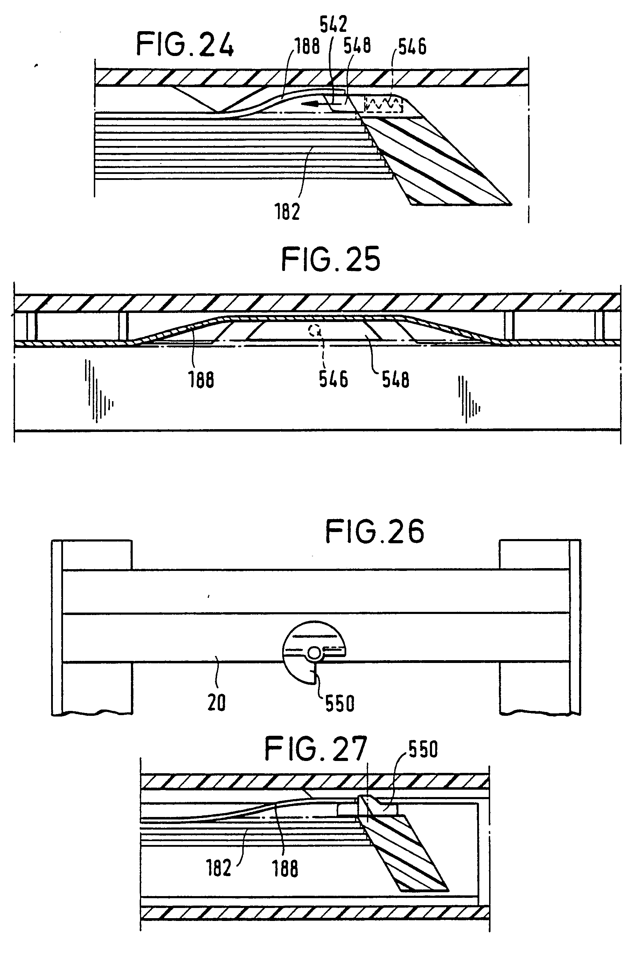

Fig. 24 und 25 zeigen eine andere Maßnahme im Bereich des Separators. Der Stapel wird ja durch das Griffstück-Schiebeteil gegenüber dem Separator und durch die Rippen 36 seitlich im Abstand vom Fenster gehalten. Hier ist nun gezeigt, wie ein im Separatorsteg in Richtung des Pfeiles 524 von einer Feder 526 ausgeschobener Hilfssteg 528 die ihm zugekehrt liegende Kante des Stapels 182 übergreift. Wenn beim Wechselzyklus das eine Foto 188 den Separatorsteg überlaufen hat, liegt seine nachlaufende Kante auf diesem Hilfssteg auf. Deshalb ist vorgesehen, daß in der ausgezogenen Position der Hilfssteg seitlich auf (nicht dargestellte) Anschläge am Gehäuse aufläuft, so daß er zurückgedrückt wird und die Kante freigibt.

Bei der Variante nach Fig. 26, 27 ist auf der Seite des Separatorsteges, die den Rückführdurchlaß begrenzt, eine drehbare Schnecke 550 angeordnet, die in einer Winkellage dieselbe Funktion hat wie der Hilfssteg 142 (vgl. Fig. 27), in einer anderen Winkellage aber die Kante auf den Stapel absenkt und freigibt. Auch die Schnecke 550 wird durch Auflaufen auf Anschläge angesteuert (nicht gezeigt).

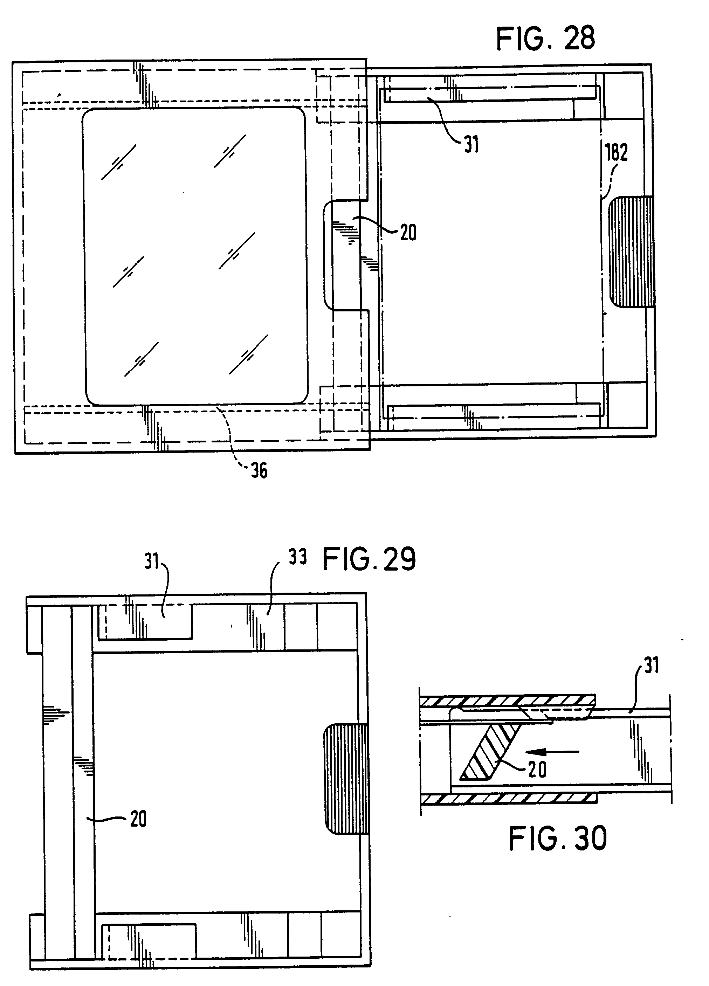

In Fig. 28 sind die Rippen 36 eingezeichnet, doch sollen sie nur zur Erläuterung dienen, da sie in dieser Variante ersetzt sind durch an den Schieber angefügte seitlich den Stapel übergreifende Lappen 31. Der Umriß des Stapels 182 ist strichpunktiert eingezeichnet. Für die Entnahme des Stapels müßten die Lappen z.B. aufgeklappt werden, was nicht gezeichnet ist. Eine vereinfachte Version dieses Konzepts ist in Fig. 29 dargestellt, wo diese Lappen soweit verkürzt sind, daß ein Durchtritt 33 für den Stapel bleibt. Fig. 30 läßt erkennen, wie sich das vereinzelte Blatt unter diese Lappen einfädelt.

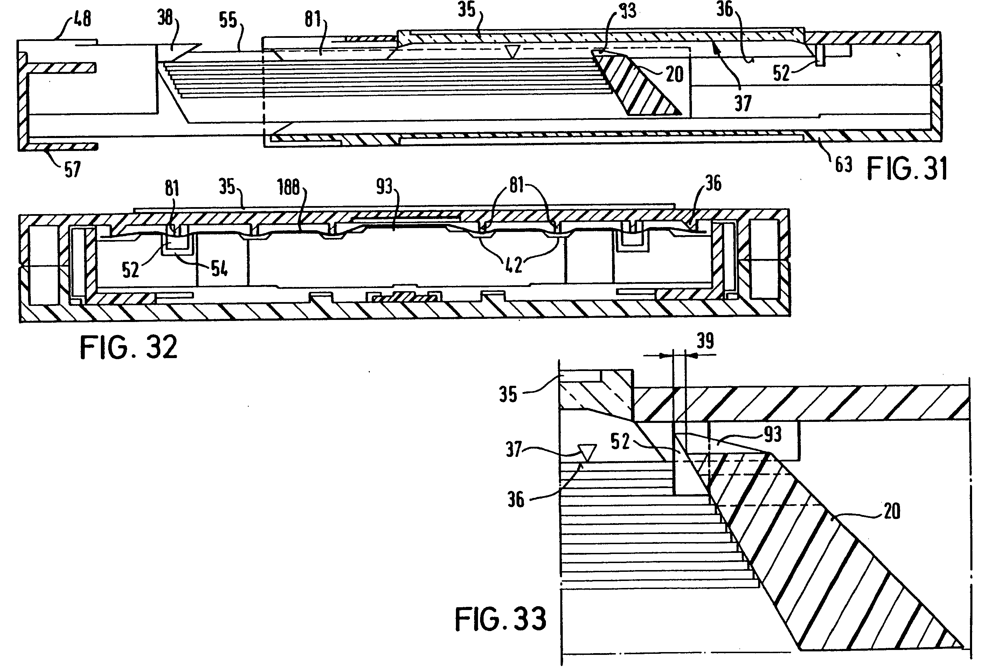

Fig. 31, 32 und 33 stellen noch einmal im Detail die Verhältnisse bei Fig. 1 bis 5 dar. In Fig. 32 ist ein Einzelblatt 188 als dicke Linie eingezeichnet um anzudeuten, wie es sich etwas quer zur Ausschubrichtung wellt, wenn die ineinandergreifenden und miteinander kämmenden Komponenten auf es einwirken. Die mit dem Pfeil 37 markierte Linie definiert das Niveau, bis zu dem höchstens die Oberseite des Stapels gelangen kann.

In Fig. 33 ist ein Schnitt durch den Separator 20 im Bereich des Vorsprungs 93 gezeigt, und das Maß, um das dieser Fortsatz nach dem Stapel zu vorsteht, ist mit 39 markiert.

## Patentansprüche

1. Vorrichtung zum zyklischen Umschichten eines Stapels rechteckiger Blätter mit einem ersten (12) und einem zweiten (14) Rahmenteil, von denen eines ein Sichtfenster (35) von einer Hauptfläche des Stapels aufweist, und die parallel zur Fensterebene auseinanderziehbar und wieder zusammenschiebbar sind, sowie mit Mitteln für das Abnehmen eines Blattes an einem Stapelende beim Auseinanderziehen und das Hinzufügen dieses Blattes am andern Stapelende beim Zusammenschieben der Rahmenteile, sowie mit Niederhaltemitteln (31) zum Distanzieren des dem Sichtfenster nächstliegenden Blattes, dadurch gekennzeichnet, daß die Niederhaltemittel (93, 538, 548, 550) an dem relativ zu dem Fenster (35) beweglichen Rahmenteil (14) angeordnet sind, und daß sie die Querkante des jeweils unter dem Fenster liegenden Blattes, die sich am Fenster entlangbewegt, von diesem in einem vorgegebenen Abstand halten.

2. Vorrichtung nach Anspruch 1, dadurch gekennzeichnet, daß die Niederhaltemittel (93) auf die Querkante zumindest in deren mittlerem Bereich einwirken.

3. Vorrichtung nach Anspruch 1 oder 2, dadurch gekennzeichnet, daß die Niederhaltemittel nahe den Enden der Querkante auf diese einwirken.

4. Vorrichtung nach Anspruch 1, dadurch gekennzeichnet, daß die Niederhaltemittel (538) über die gesamte Breite der Querkante auf diese einwirken.

5. Vorrichtung nach Anspruch 1, dadurch gekennzeichnet, daß die Niederhaltemittel (31) nahe der Querkante auf auszugsparallele Kanten des Blattes einwirken.

6. Vorrichtung nach einem der Ansprüche 1 bis 5, dadurch gekennzeichnet, daß das mit dem Fenster (35) versehene Rahmenteil (12) zusätzliche gleichsinnig wirkende Niederhaltemittel (36, 40, 81) aufweist.

7. Vorrichtung nach Anspruch 6, dadurch gekennzeichnet, daß die zusätzlichen Niederhaltemittel (36) auf die auszugsparallelen Blattkanten einwirken.

8. Vorrichtung nach Anspruch 7, dadurch gekennzeichnet, daß die zusätzlichen Niederhaltemittel quer zur Auszugsrichtung versetzt neben dem Fenster (35) angeordnet sind.

9. Vorrichtung nach Anspruch 8, dadurch gekennzeichnet, daß die zusätzlichen Niederhaltemittel (36) sich im wesentlichen über die gesamte Auszugslänge der Rahmenteile (12, 14) erstrecken.

10. Vorrichtung nach einem der Ansprüche 6 bis 9, gekennzeichnet durch schienenförmige zusätzliche Niederhaltemittel (36).

11. Vorrichtung nach einem der vorangehenden Ansprüche, dadurch gekennzeichnet, daß das relativ zu dem Fenster (35) bewegliche Rahmenteil (14) neben einem ersten, die Niederhaltermittel bildenden Niederhalter (93, 548, 550) einen zweiten Niederhalter (38) aufweist, der die andere Querkante des unter dem Fenster liegenden Blattes in einem vorgegebenen Abstand von diesem hält.

12. Vorrichtung nach Anspruch 11, dadurch gekennzeichnet, daß ein oder beide Niederhalter relativ zu dem ihn aufweisenden Rahmenteil (14) verlagerbar sind.

13. Vorrichtung nach Anspruch 12, dadurch gekennzeichnet, daß die Niederhalter-Verlagerung durch die Relativbewegung der Rahmenteile (12, 14) steuerbar ist.

14. Vorrichtung nach einem der vorangehenden Ansprüche, dadurch gekennzeichnet, daß alle Niederhaltemittel den gleichen vorgegebenen Abstand von dem Fenster (35) definieren.

15. Vorrichtung nach einem der vorangehenden Ansprüche, dadurch gekennzeichnet, daß das relativ zu dem Fenster (35) bewegliche Rahmenteil (14) auf alle vier Blattkanten einwirkende Niederhaltemittel aufweist.

16. Vorrichtung nach einem der vorangehenden Ansprüche, dadurch gekennzeichnet, daß bei zusammengeschobenen Rahmenteilen (12, 14) alle Niederhaltemittel von das Fenster (35) umgebenden Rahmenteilwandungen maskiert sind.

17. Vorrichtung nach Anspruch 7 und 11, dadurch gekennzeichnet, daß das mit dem Fenster versehene Rahmenteil (12) auf die auszugsparallelen Blattkanten einwirkende Niederhaltemittel aufweist, und daß das andere Rahmenteil (14) auf die Blattquerkanten einwirkende Niederhaltmittel aufweist.

18. Vorrichtung nach Anspruch 7 oder 17, dadurch gekennzeichnet, daß das relativ zu dem Fenster bewegliche Rahmenteil (14) Holme (44) umfaßt, die die auszugsparallelen Blattkanten abstützen, und daß die zusätzlichen Niederhaltemittel (36) ein Niveau definieren, das vom Fenster (35) weiter entfernt ist als ein Niveau, definiert durch die fensternahen Enden der Holme (44).

19. Vorrichtung nach Anspruch 10, dadurch gekennzeichnet, daß die schienenförmigen zusätzlichen Niederhaltemittel (36) kammartig in Ausnehmungen (42) einer Querwandung (20) des anderen Rahmenteils (14) greifen, die an ihnen bei der Relativbewegung der Rahmenteile (12, 14) entlangläuft.

20. Vorrichtung nach einem der vorangehenden Ansprüche, dadurch gekennzeichnet, daß die Rahmenteile Leiteinrichtungen (40) aufweisen, längs denen ein vom Stapel (182) abgenommenes Blatt (188) unter die Niederhaltemittel rückführbar ist.

21. Vorrichtung nach einem der vorangehenden Ansprüche, dadurch gekennzeichnet, daß das mit dem Fenster versehene Rahmenteil (12) als Gehäuse ausgebildet ist, aus dem das als Schieber (14) ausgebildete andere Rahmenteil von einer inneren Endlage bis zu einer äußeren Endlage herausziehbar ist.

22. Vorrichtung nach Anspruch 21, dadurch gekennzeichnet, daß das Gehäuse (12) eine erste Halteeinrichtung zum Halten eines Einzelblattes im Gehäuse bei Herausziehen des Schiebers (14) aufweist, der seinerseits eine zweite Halteeinrichtung (20) zum Mitnehmen des Reststapels aufweist, die sich längs des Fensters (35) bewegt.

23. Vorrichtung nach Anspruch 22, dadurch gekennzeichnet, daß die Niederhaltemittel an der dem Fenster (35) zugewandten Seite der zweiten Halteeinrichtung (20) angeordnet sind.

24. Vorrichtung nach Anspruch 23, dadurch gekennzeichnet, daß die Niederhaltemittel (538) im Abstand von der zweiten Halteeinrichtung (20) mit dieser einen Blattdurchtrittsspalt begrenzen.

25. Vorrichtung nach Anspruch 23, dadurch gekennzeichnet, daß die Niederhaltemittel ein Teil der zweiten Halteeinrichtung (20) bilden.

26. Vorrichtung nach Anspruch 25, gekennzeichnet durch Leitmittel zum Leiten der Querkante des Einzelblattes von einer Seite der Niederhaltemittel auf die andere Seite der Niederhaltemittel in Richtung quer zur Rahmenteilbewegung.

27. Vorrichtung nach Anspruch 26, dadurch gekennzeichnet, daß die Niederhaltemittel (548, 550) relativ zu der zweiten Halteeinrichtung (20) zwischen einer die Blattkante übergreifenden und einer die Passage der Blattkante freigebenden Position verlagerbar sind.

28. Vorrichtung nach Anspruch 27, dadurch gekennzeichnet, daß die Niederhaltemittel (548) in Richtung der Schieberbewegung verlagerbar sind.

29. Vorrichtung nach Anspruch 27, dadurch gekennzeichnet, daß die Niederhaltemittel in Abhängigkeit von der Relativlage des Schiebers verlagert werden.

30. Vorrichtung nach einem der Ansprüche 27 bis 29, dadurch gekennzeichnet, daß die Niederhaltemittel in eine ihrer Positionen federvorgespannt sind.

31. Vorrichtung nach Anspruch 27, dadurch gekennzeichnet, daß die Niederhaltemittel (550) nach Art einer Förderschnecke wirkend ausgebildet sind.

32. Vorrichtung nach Anspruch 22, dadurch gekennzeichnet, daß die Niederhaltemittel (93) einen Teil der zweiten Halteeinrichtung (20) bilden.

33. Vorrichtung nach Anspruch 32, dadurch gekennzeichnet, daß die zweite Halteeinrichtung einen Separatorsteg (20) mit angeformtem Niederhalteabschnitt (93) umfaßt.

34. Vorrichtung nach Anspruch 32 oder 33, dadurch gekennzeichnet, daß die Niederhaltemittel (93) eine der Blattkante zugekehrte, vom Fenster (35) wegweisende Schrägfläche (385) umfassen längs der die Blattkante vom Fenster (35) wegdrückbar ist.

35. Vorrichtung nach einem der Ansprüche 32 bis 34, dadurch gekennzeichnet, daß sie Leitmittel aufweist, die die Blattkante den Niederhaltemittel präsentieren.

36. Vorrichtung nach Anspruch 35, gekennzeichnet durch erste Leitmittel (40), die am Gehäuse nahe der von den Niederhaltemitteln beim Herausziehen des Schiebers zuerst passierten Fensterkante angeordnet sind.

37. Vorrichtung nach Anspruch 36, dadurch gekennzeichnet, daß die ersten Leitmittel (40) eine von den Niederhaltemitteln durchsetzte Ebene definieren.

38. Vorrichtung nach Anspruch 37, dadurch gekennzeichnet, daß die ersten Leitmittel (40) von den Niederhaltemitteln einen Abstand in Richtung quer zur Auszugsrichtung des Schiebers aufweisen.

39. Vorrichtung nach einem der Ansprüche 36 bis 38, dadurch gekennzeichnet, daß die ersten Leitmittel (40) und die Niederhaltemittel (93) miteinander kämmend angeordnet sind.

40. Vorrichtung nach einem der Ansprüche 36 bis 39, dadurch gekennzeichnet, daß die ersten Leitmittel (40) eine Einführschräge für den vom Schieber (14) in das Gehäuse (12) transportierten Reststapel aufweisen.

41. Vorrichtung nach einem der Ansprüche 35 bis 40, dadurch gekennzeichnet, daß am Gehäuse (12) zweite Leitmittel (81) vorgesehen sind, die das längs des Sichtfensters bewegte Blatt zumindest zu Beginn des Schieberauszugs bremsen.

42. Vorrichtung nach Anspruch 41, dadurch gekennzeichnet, daß die ersten und/oder die zweiten Leitmittel (40, 81) an die Gehäuseinnenseite angeformte Rippen umfassen.

43. Vorrichtung nach Anspruch 41 oder 42, dadurch gekennzeichnet, daß die zweiten Leitmittel eine Bremsschräge (388) aufweisen.

44. Vorrichtung nach einem der Ansprüche 35 bis 43, dadurch gekennzeichnet, daß sie dritte Leitmittel zum Staffeln der Blätter in Richtung der Schieberbewegung umfaßt.

45. Vorrichtung nach Anspruch 44, dadurch gekennzeichnet, daß die dritten Leitmittel am Schieber (14) ausgebildete Blattkanten-Anschlagflächen umfaßt, die schräg zur Sichtfensterebene verlaufen.

46. Vorrichtung nach Anspruch 35 und 45, dadurch gekennzeichnet, daß die Schrägflächen der Niederhaltemittel (93) und der Blattkanten-Anschlagflächen gleichsinnig schräg, vorzugsweise unter gleichem Winkel, verlaufen.

47. Vorrichtung nach Anspruch 35, dadurch gekennzeichnet, daß die Anordnung und Abmessung der Niederhaltemittel (93) und der Leitmittel (40, 81) derart aufeinander abgestimmt sind, daß das im Gehäuse (12) beim Herausziehen des Schiebers (14) zurückgebliebene Einzelblatt beim Einschub des Schiebers die Niederhaltemittel (93) unter elastischer Auswölbung in Richtung Fenster (35) überläuft.

48. Vorrichtung nach Anspruch 33, dadurch gekennzeichnet, daß der Schieber auf seiner dem Separatorsteg gegenüberliegenden Seite Blattkantenanschläge aufweist, deren Abstand von dem freien Ende des Niederhalteabschnitts (93) größer ist als die Blattabmessung in Richtung der Schieberbewegung, und daß das Gehäuse Blattkantenanschläge (52) für das Einzelblatt aufweist, deren Abstand von den schieberseitigen Blattkantenanschlägen bei eingeschobenem Schieber (14) kleiner ist als der des freien Endes des Niederhalteabschnitts (93), jedoch immer noch größer als die Blattabmessung in Richtung der Schieberbewegung.

49. Vorrichtung nach Anspruch 36, dadurch gekennzeichnet, daß die Niederhaltemittel im mittleren Bereich der Blattkante und die ersten Leitmittel nahe den Enden der Blattkante angreifen.

**Claims**

1. Device for the cyclic rearrangement of a pile of rectangular sheets, with a first (12) and a second (14) frame part, of which one has a viewing window (35) in front of a principal face of the pile, which frame parts can be pulled away from each other and pushed back together again parallel to the plane of the window, and with means for removing a sheet from one end of the pile when the frame parts are pulled away from each other and for adding this sheet to the other end of the pile when the frame parts are pushed together, and with holding-down means (31) for holding at a distance the sheet lying closest to the viewing window, characterized in that the holding down means (93, 538, 548, 550) are arraged on the frame part (14) that is movable relative to the window (35) and that they hold, at a predetermined distance from the window, the transverse edge of that sheet which lies beneath the window and moves along against the window.

2. Device according to claim 1, characterized in that the holding-down means (93) act on the transverse edge at least in the central region thereof.

3. Device according to claim 1 or 2, characterized in that the holding-down means act on the transverse edge close to the ends thereof.

4. Device according to claim 1, characterized in that the holding-down means (538) act on the transverse edge over the entire width thereof.

5. Device according to claim 1, characterized in that the holding-down means (31) act close to the transverse edge on edges of the sheet that are parallel to the withdrawal direction.

6. Device according to any one of claims 1 to 5, characterized in that the frame part (12) provided with the window (35) has additional holding-down means (36, 40, 81) acting in the same sense.

7. Device according to claim 6, characterized in that the additional holding-down means (36) act on the sheet edges that are parallel to the withdrawal direction.

8. Device according to claim 7, characterized in that the additional holding-down means are arranged adjacent to the window (35), displaced transversely with respect to the direction of withdrawal.

9. Device according to claim 8, characterized in that the additional holding-down means (36) extend substantially over the entire withdrawal stroke of the frame parts (12, 14).

10. Device according to any one of claims 6 to 9, characterized by additional holding-down means (36) in the shape of rails.

11. Device according to any of the preceding claims, characterized in that the frame part (14) movable relative to the window (35) has, in addition to a first holding-down member (93, 548, 550) forming the holding-down means, a second holding-down member (38), which holds the other transverse edge of the sheet lying beneath the window at a predetermined distance from the window.

12. Device according to claim 11, characterized in that one or both holding-down members are displaceable relative to the frame part (14) containing it.

13. Device according to claim 12, characterized in that the displacement of the holding-down members is arranged to be controlled by the relative movement of the frame parts (12, 14).

14. Device according to any of the preceding claims, characterized in that all of the holding-down means define the same predetermined distance from the window (35).

15. Device according to any of the preceding claims, characterized in that the frame part (14) movable relative to the window (35) has holding-down means acting on all four sheet edges.

16. Device according to any of the preceding claims, characterized in that the frame parts (12, 14) are pushed together, all of the holding-down means are masked by the frame part walls surrounding the window (35).

17. Device according to claim 7 and 11, characterized in that the frame part (12) provided with the window has holding-down means acting on the sheet edges parallel to the withdrawal direction, and the other frame part (14) has holding-down means acting on the transverse edges of the sheet.

18. Device according to claim 7 or 17, characterized in that the frame part (14) movable relative to the window comprises side-pieces (44) which support the sheet edges parallel to the direction of withdrawal, and that the additional holding-down means (36) define a level that is further removed from the window (35) than a level defined by the ends close to the window of the side-pieces (44).

19. Device according to claim 10, characterized in that the rail-shaped additional holding-down means (36) engage like the teeth of a comb in recesses (42) in a transverse wall (20) of the other frame part (14) moving past them during the relative movement of the frame parts (12, 14).

20. Device according to any of the preceding claims, characterized in that the frame parts have guide means (40), along which a sheet (188) removed from the pile (182) can be returned beneath the holding-down means.

21. Device according to any of the preceding claims, characterized in that the frame part (12) provided with the window is formed as a housing from which the other frame part, formed as a slider member (14), can be withdrawn from an inner end position to an outer end position.

22. Device according to claim 21, characterized in that the housing (12) has a first holding means for holding a single sheet in the housing when the slider member (14) is withdrawn, the slider member itself having a second holding means (20) for transporting the reaminder of the pile which is moved along the window (35).

23. Device according to claim 22, characterized in that the holding-down means are arranged at that side of the second holding means (20) which faces the window (35).

24. Device according to claim 23, characterized in that the holding-down means (538) spaced from the second holding means (20) define with the latter a through-gap for a sheet.

25. Device according to claim 23, characterized in that the holding-down means form a part of the second holding means (20).

26. Device according to claim 25, characterized by guide means for guiding the transverse edge of a single sheet from one side of the holding-down means to the other side of the holding-down means in a direction transverse to the frame part movement.

27. Device according to claim 26, characterized in that the holding-down means (548, 550) are displaceable relative to the second holding means (20) between a position engaging over the sheet edge and a position freeing the passage of the sheet edge.

28. Device according to claim 27, characterized in that the holding-down means (548) are displaceable in the direction of movement of the slider member.

29. Device according to claim 27, characterized in that the holding-down means are displaced as a function of the relative position of the slider member.

30. Device according to any of claims 27 to 29, characterized in that the holding-down means are spring-biassed into one of their positions.

31. Device according to claim 27, characterized in that the holding-down means (550) are arranged to act in the manner of a conveyor worm.

32. Device according to claim 22, characterized in that the holding-down means (93) form a part of the second holding means (20).

33. Device according to claim 32, characterized in that the second holding means comprises a separator bar (20) with an integral holding-down portion (93).

34. Device according to claim 32 or 33, characterized in that the holding-down means (93) comprise an inclined face (385) turned towards the sheet edge and pointing away from the window (35), along which face the sheet edge can be pushed away from the window (35).

35. Device according to any one of claims 32 to 34, characterized in that it has guide means which present the sheet edge to the holding-down means.

36. Device according to claim 35, characterized by first guide means (40) which are arranged in the housing close to that edge of the window which is passed first by the holding-down means when the slider member is being pulled out.

37. Device according to claim 36, characterized in that the first guide means (40) define a plane intersected by the holding-down means.

38. Device according to claim 37, characterized in that the first guide means (40) are spaced from the holding-down means in a direction transverse to the direction of withdrawal of the slider member.

39. Device according to any of claims 36 to 38, characterized in that the first guide means (40) and the holding-down means (93) are arranged so as to mesh with one another.

40. Device according to any of claims 36 to 39, characterized in that the first guide means (40) have an inclined entry face for the remainder of the pile transported into the housing (12) by the slider member (14).

41. Device according to any one of claims 35 to 40, characterized in that second guide means (81) are provided in the housing (12), which guide means brake the sheet moved along the viewing window at least at the beginning of the withdrawal of the slider member.

42. Device according to claim 41, characterized in that the first and/or the second guide means (40, 81) comprise ribs integrally formed on the inside of the housing.

43. Device according to claim 41 or 42, characterized in that the second guide means have an inclined braking surface (388).

44. Device according to any one of claims 35 to 43, characterized in that it comprises third guide means for gradually raising the sheet along the direction of movement of the slider member.

45. Device according to claim 44, characterized in that the third guide means comprises sheet edge abutment faces integrally formed on the slider member (14) which extend at an angle to the plane of the viewing window.

46. Device according to claim 34 and 45, characterized in that the inclined faces of the holding-down means (93) and the sheet edge abutment faces are inclined in the same direction, preferably at the same angle.

47. Device according to claim 35, characterized in that the arrangement and dimensions of the holding-down means (93) and the guide means (40, 81) are so arranged with respect to each other that the single sheet remaining in the housing (12) when the slider member (14) is withdrawn runs over the holding-down means (93), while arching resiliently in the direction of the window (35), when the slider member is being pushed in.

48. Device according to claim 33, characterized in that the slider member has, on its side lying opposite the separator bar, sheet edge abutments whose distance from the free end of the holding-down portion (93) is greater than the dimension of the sheet in the direction of movement of the slider member, and that the housing has sheet edge abutments (52) for the single sheet, of which the distance from the sheet edge abutments in the slider member when the slider member (14) is in the pushed-in position is smaller than that of the free end of the holding-down portion (93) but is, however, greater than the dimension of the sheet the direction of movement of the slider member.

49. Device according to claim 36, characterized in that the holding-down means engage in the central area of the sheet edge, and the first guide means engage close to the ends of the sheet edge.

**Revendications**

1. Dispositif de reclassement cyclique d'une pile de feuilles rectangulaires, comportant un premier élément en forme de cadre (12) et un second élément en forme de cadre (14), dont l'un comporte un voyant (35) situé devant une surface principale de la pile, et qui peuvent être extraits l'un de l'autre et réinsérés l'un dans l'autre parallèlement au plan du voyant, ainsi que des moyens pour retirer une feuille au niveau d'une extrémité de la pile lors de l'extraction des éléments en forme de cadres l'un hors de l'autre et l'ajouter sur l'autre extrémité de la pile lors de la réinsertion des éléments en forme de cadres l'un dans l'autre, ainsi que des moyens de retenue (31) servant à maintenir à distance la feuille la plus proche du voyant, caractérisé par le fait que les moyens de retenue (93, 538, 548, 550) sont installés sur l'élément en forme de cadre (14) déplaçable par rapport au voyant (35) et en ce que ces moyens maintiennent le bord transversal, qui se déplace le long du voyant, de la feuille située respectivement au-dessous de ce voyant, à une distance prédéterminée de ce denier.

2. Dispositif selon la revendication 1, caractérisé en ce que les moyens de retenue (93) agissent sur le bord transversal, au moins dans sa zone médiane.

3. Dispositif selon la revendication 1 ou 2, caractérisé en ce que les moyens de retenue agissent sur le bord transversal, à proximité des extrémités de ce dernier.

4. Dispositif selon la revendication 1, caractérisé en ce que les moyens de retenue (538) agissent sur toute la largeur du bord transversal.

5. Dispositif selon la revendication 1, caractérisé en ce que les moyens de retenue (31) agissent, à proximité du bord transversal, sur des bords de la feuille, qui sont parallèles à la direction d'extraction.

6. Dispositif selon l'une quelconque des revendications 1 à 5, caractérisé en ce que l'élément en forme de cadre (12) muni du voyant (35) comporte des moyens supplémentaires de retenue (36, 40, 81) agissant dans le même sens.

7. Dispositif selon la revendication 6, caractérisé en ce que les moyens supplémentaires de retenue (36) agissent sur des bords de la feuille parallèles à la direction d'extraction.

8. Dispositif selon la revendication 7, caractérisé en ce que les moyens supplémentaries de retenue sont disposées en étant décalés transversalement par rapport à la direction d'extraction, à côté du voyant (35).

9. Dispositif selon la revendication 8, caractérisé en ce que les moyens supplémentaires de retenue (36) s'étendent sensiblement sur toute la longueur d'extraction des éléments en forme de cadres (12, 14).

10. Dispositif selon les revendications 6 à 9, caractérisé par des moyens supplémentaires de retenue (36) en forme de rails.

11. Dispositif selon l'une des revendications précédentes, caractérisé en ce que l'élément en forme de cadre (14), mobile par rapport à la fenêtre (35), possède, à côté d'un premier dispositif de retenue (93, 548, 550) formant les moyens de retenue, un second dispositif de retenue (38), qui maintient l'autre bord transversal de la feuille située au-dessous du voyant, à une distance prédéterminée de ce dernier.

12. Dispositif selon la revendication 11, caractérisé en ce qu'un ou les deux dispositifs de retenue peuvent être décalés par rapport à l'élément en forme de cadre (14), qui les comporte.

13. Dispositif selon la revendication 12, caractérisé en ce que le décalage des dispositifs de retenue peut être commandé au moyens du déplacement relatif des éléments en forme de cadres (12, 14).

14. Dispositif selon l'une des revendications précédentes, caractérisé en ce que tous les moyens de retenue définissent la même distance prédéterminée par rapport au voyant (35).

15. Dispositif selon l'une des revendications précédentes, caractérisé en ce que l'élément en forme de cadre (14) mobile par rapport au voyant (35) comporte des moyens de retenue agissant sur l'ensemble des quatre bords d'une feuille.

16. Dispositif selon l'une des revendications précédentes, caractérisé en ce que, lorsque les deux éléments en forme de cadres (12, 14) sont rentrés l'un dans l'autre, tous les moyens de retenue sont masqués par des parois des éléments en forme de cadres, entourant le voyant (35).

17. Dispositif selon les revendications 7 et 11, caractérisé en ce que l'élément en forme de cadre (12) muni du voyant possède des moyens de retenu, qui agissent sur les bords des feuilles parallèles à la direction d'extraction, et en ce que l'autre élément en forme de cadre (14) possède des moyens de retenue agissant sur les bords transversaux des feuilles.

18. Dispositif selon la revendication 7 ou 17, caractérisé en ce que l'élément en forme de cadre (14) mobile par rapport au voyant comporte des longerons (44), qui soutiennent les bords des feuilles, qui sont parallèles à la direction d'extraction et en ce que les moyens supplémentaires de retenue (36) définissent un niveau, qui est plus éloigné du voyant (35) qu'un niveau défini par les extrémités, proches du voyant, des longerons (44).

19. Dispositif selon la revendication 10, caractérisé en ce que les moyens supplémentaires de retenue en forme de rails (36) s'engagent, à la manière d'un peigne, dans des évidements (42) d'une paroi transversale (20) de l'autre élément en forme de cadre (14), qui se déplace devant ces évidements, lors du déplacement relatif des éléments en forme de cadres (12, 14).

20. Dispositif selon l'une des revendications précédentes, caractérisé en ce que les éléments en forme de cadres comportent des dispositifs de guidage (40), le long desquels une feuille (188) prélevée de la pile (182) peut être renvoyée au-dessous des moyens de retenue.

21. Dispositif selon l'une des revendications précédentes, caractérisé en ce que l'élément en forme de cadre (12) muni du voyant est réalisé sous la forme d'un boîtier, hors duquel l'autre élément en forme de cadre, réalisé sous la forme d'un tiroir (14), peut être ressorti depuis une position d'extrémité intérieure jusque dans une position d'extrémité extérieure.

22. Dispositif selon la revendication 21, caractérisé en ce que le boîtier (12) possède un premier dispositif de retenue servant à retenier une feuille individuelle dans le boîtier lors de l'extraction du tiroir (14), qui pour sa part comporte un second dispositif de retenue (20) qui sert à entraîner la pile restante et se déplace le long du voyant (35).

23. Dispositif selon la revendication 22, caractérisé en ce que les moyens de retenue sont disposés sur le côté du second dispositif de retenue (20), tourné vers le voyant (20).

24. Dispositif selon la revendication 23, caractérisé en ce que les moyens de retenue (538), situés à distance du second dispositif de retenue (20), limitent avec ce dernier une fente de passage pour la feuille.

25. Dispositif selon la revendication 23, caractérisé en ce que les moyens de retenue forment une partie de second dispositif de retenue (20).

26. Dispositif selon la revendication 25, caractérisé par des moyens de guidage servant à guider le bord transversal de la feuille individuelle d'un côté jusqu'à l'autre côté des moyens de retenue, dans une direction transversale par rapport au déplacement des éléments en forme de cadre.

27. Dispositif selon la revendication 26, caractérisé en ce que les moyens de retenue (548,550) peuvent être décalés par rapport au second dispositif de retenue (20) entre une position dans laquelle ils recouvrent le bord de la feuille, et une position, dans laquelle ils libèrent le passage du bord de la feuille.

28. Dispositif selon la revendication 27, caractérisé en ce que les moyens de retenue (548) peuvent être décalés dans la direction de déplacement du tiroir.

29. Dispositif selon la revendication 27, caractérisé en ce que les moyens de retenue sont décalés en fonction de la position relative du tiroir.

30. Dispositif selon l'une des revendications 27 à 29, caractérisé en ce que les moyens de retenue sont précontraints élastiquement dans l'une de leurs positions.

31. Dispositif selon la revendication 7, caractérisé en ce que les moyens de retenue (550) sont agencés de manière à agir à la façon d'une vis convoyeuse.

32. Dispositif selon la revendication 22, caractérisé en ce que les moyens de retenue (93) font partie du second dispositif de retenue (20).

33. Dispositif selon la revendication 32, caractérisé en ce que le second dispositif de retenue comporte une barrette formant séparateur (20), sur laquelle est formée par moulage une section de retenue (93).

34. Dispositif selon la revendication 32 ou 33, caractérisé en ce que les moyens de retenue (93) comportent une surface inclinée (385), qui est tournée vers le bord de la feuille et s'écarte du voyant (35) et le long de laquelle le bord de la feuille peut être repoussé en étant écarté du voyant (35).

35. Dispositif selon l'une des revendications 32 à 34, caractérisé en ce qu'il comporte des moyens de guidage, qui présentent le bord de la feuille aux moyens de retenue.

36. Dispositif selon la revendication 35, caractérisé par des premiers moyens de guidage (40), qui sont disposés sur le boîtier à proximité du bord de voyant qui est franchi en premier par les moyens de retenue lors de l'extraction du tiroir.

37. Dispositif selon la revendication 36, caractérisé en ce que les premiers moyens de guidage (40) définissent un plant traversé par les moyens de retenue.

38. Dispositif selon la revendication 37, caractérisé en ce que les premiers moyens de guidage (40) sont situés à distance des moyens de retenue dans une direction transversale à la direction d'extraction du tiroir.

39. Dispositif selon l'une des revendications 36 à 38, caractérisé en ce que les premiers moyens de guidage (40) et les moyens de retenue (93) sont disposés de manière à s'engager réciproquement à la manière de peignes.

40. Dispositif selon l'une des revendications 36 à 39, caractérisé en ce que les premiers moyens de guidage (40) possèdent un biseau d'insertion pour la pile restante introduite par le tiroir (14) dans le boîtier (12).

41. Dispositif selon l'une des revendications 35 à 40, caractérisé en ce qu'il est prévu sur le boîtier (12) des seconds moyens de guidage (81), qui freinent la feuille déplacée le long du voyant, au moins au début de l'opération d'extraction du tiroir.

42. Dispositif selon la revendication 41, caractérisé en ce que les premiers et/ou les seconds moyens de guidage (40, 81) comportent des nervures formées par façonnage sur la face intéreure du boîtier.

43. Dispositif selon la revendication 41 ou 42, caractérisé en ce que les seconds moyens de guidage possèdent un biseau de freinage (388).

44. Dispositif selon l'une des revendications 35 à 43, caractérisé en ce qu'il comporte des troisièmes moyens de guidage pour étager les feuilles dans la direction de déplacement du tiroir.

45. Dispositif selon la revendication 44, caractérisé en ce que les troisièmes moyens de guidage comportent des surfaces de butée pour le bord de la feuille, qui sont ménagées sur le tiroir (14) et s'étendent obliquement par rapport au plant du voyant.

46. Dispositif selon les revendications 34 et 35, caractérisé en ce que les surfaces obliques des moyens de retenue (93) et les surfaces de butée pour le bord de la feuille s'étendent obliquement et dans le même sens, de préférence sour le même angle.

47. Dispositif selon la revendication 35, caractérisé en ce que l'agencement et les dimensions des moyens de retenue (93) et des moyens de guidage (40, 81) sont accordés entre eux de telle sorte que la feuille individuelle, qui reste dans le boîtier (12) lors de l'extraction du tiroir (14), passe au-dessus des moyens de retenue (93) en étant cintrée élastiquement en direction du voyant (35), lors de l'insertion du tiroir.

48. Dispositif selon la revendication 33, caractérisé en ce que le tiroir comporte, sur sa face tournée à l'opposé de la barrette formant séparateur, des butées pour le bord de la feuille, dont la distance par rapport à l'extrémité libre de la section de retenue (93) est supérieure à la dimension de la feuille dans la direction du déplacement du tiroir, et que le boîtier comporte des butées (52) pour le bord de la feuille individuelle, dont la distance par rapport aux butées prévues sur le tiroir pour le bord de la feuille, lorsque le tiroir (14) est inséré, est inférieure à leur distance par rapport à l'extrémité libre de la section de retenue (93), mais en étant toujours supérieure à la dimension de la feuille dans la direction de déplacement du tiroir.

49. Dispositif selon la revendication 36, caractérisé en ce que les moyens de retenue s'appliquent dans la zone médiane du bord de la feuille et que les premiers moyens de guidage s'appliquent à proximité des extrémités du bord de la feuille.

FIG. 6

FIG. 1

FIG. 2

FIG.3

EP 0 202 283 B1

FIG. 4

FIG. 5

EP 0 202 283 B1

# FIG. 7

# FIG. 8

FIG.9

FIG.10

# FIG.11

# FIG.12

# FIG. 13

EP 0 202 283 B1

FIG.14

FIG.16

FIG.15

FIG. 18

FIG.17

EP 0 202 283 B1

FIG. 19

FIG. 20

FIG. 21

FIG.22

FIG.23

FIG.24

FIG.25

FIG.26

FIG.27

FIG. 28

31

182

20

36

31    33 FIG.29

31

20

20

FIG. 30

FIG. 31

FIG. 32

FIG. 33